# DEMANDE DE BREVET EUROPEEN

(11) **EP 3 339 978 A1**
(43) Date de publication de la demande: **27.06.2018**
(21) Numéro de dépôt: 16205356.5
(22) Date de dépôt: 20.12.2016
(51) Int. Cl.: G04B 37/22

(54) **COMPOSANT HORLOGER EN MATERIAU COMPOSITE**

(71) Demandeur: The Swatch Group Research and Development Ltd, 2074 Marin (CH)
(72) Inventeur: François, Nicolas, 2000 Neuchâtel (CH); Kissling, Gregory, 2532 Macolin (CH); Bourban, Stewes, 1589 Chabrey (CH); Muller, Juliette, 2520 La Neuveville (CH); Bazin, Jean-Luc, 2512 Tüscherz-Alfermée (CH)
(74) Mandataire: Giraud, Eric

(57) **Abrégé**

L'invention se rapporte à un composant horloger en matériau composite comprenant au moins un renfort et une matrice, le renfort présentant une structure en nid d'abeille en trois dimensions avec une pluralité d'alvéoles dans lesquelles est injectée la matrice.

L'invention concerne également un procédé de fabrication d'un tel composant horloger.

## Description

### Domaine de l'invention

L'invention se rapporte à un composant horloger en matériau composite, notamment une carrure, une lunette ou encore un cadran, le matériau composite présentant un renfort en nid d'abeille dans lequel est injecté une résine par exemple thermodurcissable.

La présente invention concerne également un procédé de fabrication du composant horloger.

### Arrière-plan de l'invention

Il est connu de l'art antérieur, et notamment de l'aéronautique, les pièces fabriquées à partir de panneaux sandwich en matériau composite obtenus en plaçant des nappes ou des tissus de fibres imprégnées de résine sur chacune des deux faces d'une âme à cellules ouvertes le plus souvent constituée par une structure en nid d'abeille.

En raison de leurs bonnes caractéristiques mécaniques, les panneaux sandwich en matériau composite sont utilisés dans de nombreux domaines, et notamment l'aéronautique où est particulièrement apprécié la combinaison de la légèreté et des bonnes propriétés mécaniques.

Cependant, les panneaux sandwich en matériau composite actuels ne sont pas adaptables aux pièces d'horlogerie et ne permettent pas la réalisation de petites pièces esthétiques avec des formes concaves ou convexes. Ils sont également sensibles à l'usure et aux rayures.

### Résumé de l'invention

L'invention a notamment pour objectif de pallier aux différents inconvénients de ces techniques connues.

Plus précisément, un objectif de l'invention est de fournir des composants d'horlogerie réalisés en un matériau composite présentant des propriétés mécaniques satisfaisantes, notamment une bonne résistance aux chocs, griffures et rayures, tout en conservant un aspect esthétique attrayant.

Ces objectifs, ainsi que d'autres qui apparaîtront plus clairement par la suite, sont atteints selon l'invention à l'aide d'un composant horloger en matériau composite, le matériau composite comprenant au moins un renfort et une matrice, le renfort présentant une structure en nid d'abeille en trois dimensions avec une pluralité de cellules dans lesquelles est injectée la matrice.

Conformément à d'autres variantes avantageuses de l'invention :
- le renfort présentant une structure en nid d'abeille est réalisé au moyen d'un matériau choisi parmi les fibres synthétiques, les fibres naturelles, les métaux y compris les métaux amorphes ou partiellement amorphes, les céramiques et les thermoplastiques ;
- la matrice est choisie parmi les résines thermodurcissables de la famille des polyépoxydes, de la famille des acryliques, de la famille des polyuréthanes ou de la famille des thermoplastiques comme les polyetherketones ou les polyamides, les polyuréthanes, les polyoléfines ou encore de la famille des élastomères comme les polysiloxanes ;
- la matrice comprend un additif choisi parmi des colorants, des pigments phosphorescents, de la silice, des charges de nanotubes de carbone ou encore des charges de nano-diamants ;
- les cellules sont de forme hexagonale ;
- la hauteur des cellules est comprise entre 0.5mm et 2mm ;
- la longueur du côté de la cellule est comprise entre 0.5mm et 2mm.

L'invention a également pour objet différents procédés de réalisation d'un composant en matériau composite comprenant au moins un renfort et une matrice, le renfort présentant une structure en nid d'abeille en trois dimensions avec une pluralité de cellules dans lesquelles est injectée la matrice.

Un premier procédé, ayant pour avantage de réaliser un composant en structure composite dont les cellules du nid d'abeille sont remplies d'une résine afin d'avoir une esthétique composite (combinaison d'un renfort coloré avec la résine transparente ou d'une autre couleur), comporte les étapes suivantes :
- former le renfort présentant une structure nid d'abeille,
- placer le renfort dans un moule,
- fermer le moule et injecter la résine dans le moule à une température T et une pression P,
- maintenir le moule fermé à la pression P pour le refroidissement,
- extraire le composant formé du moule,
- reprendre le composant en post-traitement, par exemple usinage/polissage.

Un second procédé, ayant pour avantage de réaliser un composant avec une structure composite légère, résistante et esthétique, comporte les étapes suivantes :
- former le renfort présentant la structure nid d'abeille ;
- fermer les cellules par deux feuilles minces en matériaux composites ou métalliques ;
- lier les cellules nid d'abeille et les feuilles minces selon la nature des matériaux par collage, brasage, thermo-soudage ou soudage ultrasons ;
- placer le renfort dans un moule et injecter la résine
- fermer le moule et injecter la résine dans le moule à une température T et une pression P,
- maintenir le moule fermé à la pression P pour le refroidissement,
- extraire le composant formé du moule,
- reprendre le composant en post-traitement, par exemple usinage/polissage.

Conformément à d'autres variantes avantageuses des procédés selon l'invention :
- le renfort présentant une structure nid d'abeille est réalisé au moyen d'un matériau choisi parmi les fibres synthétiques, les fibres naturelles, les métaux y compris les métaux amorphes ou partiellement amorphes, les céramiques, et les thermoplastiques.
- la matrice est choisie parmi les résines thermodurcissables de la famille des polyépoxydes, de la famille des acryliques, de la famille des polyuréthanes ou de la famille des thermoplastiques comme les polyetherketones ou les polyamides, les polyuréthanes, les polyoléfines ou encore de la famille des élastomères comme les polysiloxanes.
- la matrice comprend un additif parmi des colorants, des pigments phosphorescents, de la silice, des charges de nanotubes de carbone ou encore des charges de nano-diamants.
- la matrice comprend une combinaison d'au moins deux additifs.

### Description sommaire des dessins

D'autres caractéristiques et avantages de l'invention apparaîtront plus clairement à la lecture de la description suivante d'un mode de réalisation particulier de l'invention, donné à titre de simple exemple illustratif et non limitatif, et des figures annexées, parmi lesquelles :
- les figures 1a et 1b sont des vues en perspective de la réalisation d'une structure nid d'abeille ;
- les figures 2a et 2b sont respectivement des photos d'une boîte de montre et de son fond en matériau composite conforme à l'invention.

### Description détaillée des modes de réalisation préférés

L'invention concerne les composants horlogers, tels que la carrure, le fond, la lunette ou encore le cadran ou des maillons de bracelet, réalisés en un matériau composite particulier.

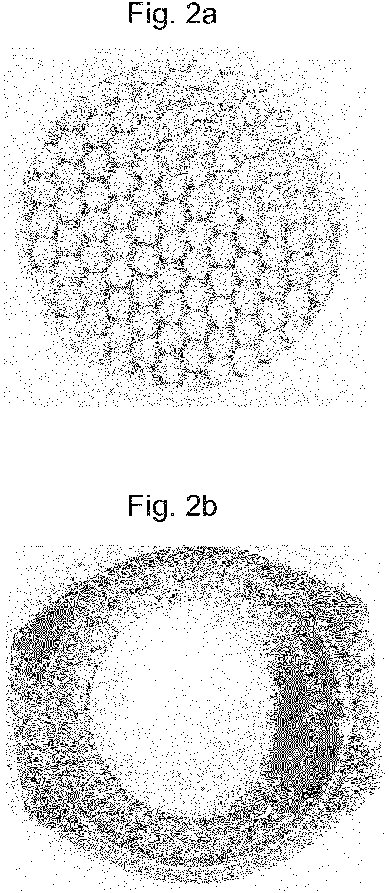

Tel qu'illustré à la figure 2a, le composant horloger en matériau composite selon l'invention comprend au moins un renfort et une matrice, le renfort présentant une structure en nid d'abeille en trois dimensions avec une pluralité de cellules, préférentiellement de forme hexagonale, et dans lesquelles est injectée la matrice. Bien évidemment, l'homme du métier pourrait envisager d'autres formes de cellules en fonction de ses besoins.

Selon l'invention, la structure nid d'abeille formant le renfort peut être réalisée au moyen d'un matériau choisi parmi les fibres synthétiques ou les fibres naturelles.

Il existe une large variété de fibres synthétiques, dans le cadre de l'invention, les fibres peuvent être choisies parmi celles-ci : les fibres de carbone, les fibres de verre, les fibres en carbure de silice, les fibres en polyéthylène de masse molaire très élevée (UHMWPE) comme le Dyneema®, les fibres de Vectran®, les fibres de quartz comme le Quartzel®, les fibres d'aramide, les fibres de carbure de silicium comme le Nicalon®, ou encore des fibres en polytéréphtalate d'éthylène (PET).

Selon une alternative de l'invention, les fibres peuvent être d'origine naturelle telles que les fibres de lin ou les fibres cellulosiques.

Selon un autre mode de réalisation de l'invention, la structure nid d'abeille du renfort peut être réalisée au moyen de matériaux métalliques, de céramiques, ou encore de thermoplastiques.

Par exemple, la structure nid d'abeille peut être réalisée en titane, un tel métal a pour avantage d'avoir d'excellentes caractéristiques d'amortissement et de résistance à la fatigue. Une fois formée, la structure nid d'abeille obtenue combine légèreté, grande résistance et bonnes propriétés d'amortissement des chocs.

Bien évidemment d'autres métaux ou alliages peuvent être utilisés, comme de l'or, du titane, du cuivre, ou encore de l'aluminium. Les métaux amorphes ou partiellement amorphes sont également envisageables.

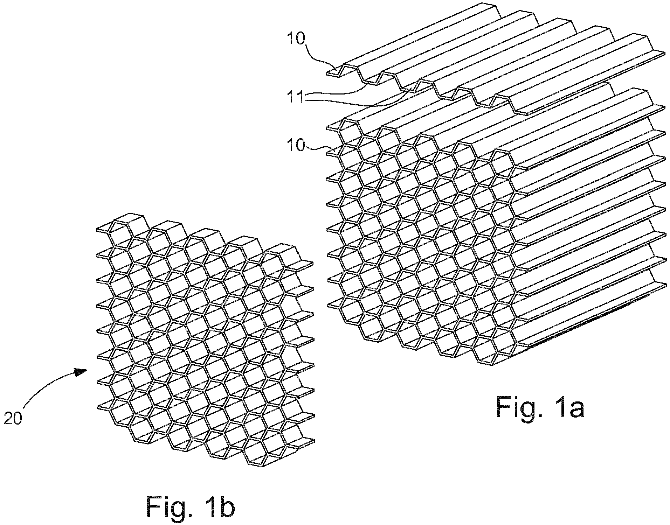

Pour réaliser la structure nid d'abeille on peut utiliser des feuilles cannelées, par exemple des feuilles minces métalliques ou encore des nappes de fibres pré-imprégnées. Les feuilles cannelées 10 sont superposées et collées ou soudées le long de leurs facettes 11 en contact mutuel, comme illustré à la figure 1a. Des panneaux en nid d'abeille 20 sont directement obtenus par découpe du bloc de feuilles perpendiculairement aux cannelures, comme illustré à la figure 1 b.

Il peut aussi être utilisé des bandelettes métalliques ou composites qui sont cannelées par emboutissage puis collées entre elles.

La structure nid d'abeille peut aussi être réalisée par impression 3D (technologie frittage de poudres métalliques) ou usinage (fraisage, laser, jet d'eau) de plaques composites/métalliques. On peut aussi envisager un procédé d'extrusion de profilé avec une filière ayant la forme de nid d'abeille, de manière à donner la bonne forme au renfort nid d'abeille, celui-ci peut-être ré-usiné.

Selon l'invention, les cellules de la structure nid d'abeille ont une hauteur comprise entre 0.5 mm et 2 mm, et un bord présentant une longueur comprise de préférence entre 0.5 mm et 2 mm, et plus préférentiellement entre 0.5 mm et 0.8 mm. Bien évidemment, les dimensions des cellules hexagonales peuvent varier en fonction du type de composants horlogers que l'on souhaite réaliser. Par exemple, pour réaliser un fond de boîte une hauteur moindre sera nécessaire comparé à la hauteur nécessaire pour réaliser une carrure. On pourra également faire varier la longueur du bord de la cellule en fonction de la densité de cellules souhaitée.

Selon les besoins de l'homme du métier, et notamment pour l'obtention de propriétés particulières, la structure nid d'abeille peut être réalisée à partir d'une combinaison de fibres de matières différentes. Par exemple, des fibres de carbone et des fibres de polyéthylène ultra haute densité pourraient être utilisées au sein d'une même nappe afin de combiner le haut module du carbone et la haute ténacité du Polyéthylène très haute densité. Encore selon un autre exemple, de l'aluminium pourrait être utilisé pour réaliser la structure nid d'abeille.

Par ailleurs, les fibres, telles que le Vectran®, le PET ou les fibres de verre, peuvent recevoir une coloration dans la masse lors de leur fabrication de manière à obtenir un aspect esthétique particulier, on peut par exemple imaginer des fibres colorées permettant de contraster avec la matrice injectée dans les cellules et ainsi mieux faire ressortir la structure nid d'abeille. On peut également imaginer une alternance de la couleur des fibres au sein d'une même nappe de fibres.

De manière à renforcer la structure nid d'abeille, une matrice, de type résine thermodurcissable, est choisie en fonction des propriétés souhaitées et est injectée dans les cellules de la structure nid d'abeille. Cette résine peut être une résine époxy, une résine acrylique, une résine polyuréthane ou une résine polysiloxane. Selon une variante préférée de l'invention, les nappes unidirectionnelles sont pré-imprégnées en appliquant la résine sur les filaments avant de superposer les couches les unes sur les autres.

Il est à noter que par le terme matrice, on entend une matière qui va enrober et recouvrir tout ou partie du renfort en nid d'abeille.

Dans le cas d'une structure nid d'abeille en matériau métallique, de manière à favoriser l'adhésion de la matrice, les feuilles minces en matériau métallique utilisées pour former la structure nid d'abeille peuvent être micro-perforées de telle façon que la résine injectée dans les cellules pénètre les feuilles minces en matériau métallique formant les cellules et ainsi augmente la ténacité et la durabilité de l'assemblage. Selon une variante de l'invention, les feuilles minces en matériau métallique peuvent être texturées par microbillage ou par calandrage ou par attaque chimique ou par laser en surface pour que la résine adhère mieux aux feuilles minces en matériau métallique formant les cellules.

Selon un mode de réalisation particulier de l'invention, la résine peut comprendre des charges de nanotubes de carbone ou encore des charges de nano-diamants à base de carbure de silicium par exemple, de manière à augmenter les modules de traction ou de flexion ou pour améliorer la résistance à la rayure. Par exemple, un ajout de 0,5% à 1,5% de charges de nano-diamants permet d'augmenter la dureté du matériau, ce qui accroit la résistance du composant horloger aux rayures et frottements.

La résine peut également comprendre des charges colorées et/ou photoluminescentes de type oxydes d'alcalino-terreux dopés avec un ou plusieurs lanthanides de manière à conférer un aspect esthétique particulier au composant horloger lorsque la luminosité ambiante baisse. Selon cette variante particulièrement avantageuse, la matière des fibres est transparente comme la fibre de verre et possède un indice de réfraction sensiblement égal à celui de la résine. Par exemple, on choisira idéalement de combiner la fibre de verre et la résine acrylique qui ont toutes les deux un indice de réfraction de 1,5.

Selon une autre variante, les pigments phosphorescents peuvent être combinés avec des fluorophores spécifiques afin d'obtenir différents couples de couleur jour/nuit.

Grâce à ces différents aspects de l'invention, on dispose d'un composant en matériau composite robuste pouvant présenter un aspect esthétique particulier.

L'invention concerne également un procédé de réalisation d'un composant horloger en matériau composite, le matériau composite comprenant au moins un renfort et une matrice, le renfort se présentant sous la forme d'une structure en nid d'abeille en trois dimensions avec une pluralité de cellules dans lesquelles est injectée la matrice.

Lors de la première étape, on réalise le renfort présentant une structure nid d'abeille et on peut éventuellement le découper selon une forme souhaitée, par exemple la forme d'une boite de montre.

Ensuite, on place le renfort dans un moule ayant la forme du composant souhaité, on ferme le moule et on injecte la matrice dans le moule à une température T et une pression P de manière à solidariser la résine à la structure par le biais d'une étape de polymérisation ou de réticulation de la résine sous pression et selon un cycle de température prédéterminée.

Après refroidissement et maintien à une pression P, le composant obtenu peut être repris en usinage/polissage pour assurer une bonne finition du composant.

Un tel procédé permet de fabriquer des pièces d'horlogerie en matériau composite conforme à l'invention. Ainsi, des boites de montre, des cadrans, des platines, des ponts, des lunettes, ou encore des rehauts voire des maillons peuvent être fabriqués.

Un tel matériau est particulièrement intéressant pour fournir des pièces d'horlogerie particulièrement légères, très résistantes, et alliant un aspect esthétique particulier dû à la structure nid d'abeille ce qui permet de se démarquer des matériaux composites classiques.

A titre d'exemple illustratif et non limitatif, une boîte de montre et son fond, visibles à la figure 2a et 2b, peuvent être réalisée à partir d'une structure nid d'abeille en fibres de carbone avec une résine époxy chargée avec 1% de nano-diamants, la boîte de montre et le fond combineraient les avantages de ténacité, d'amortissement des chocs, de résistance aux rayures et de légèreté particulièrement recherchés dans l'horlogerie.

Bien entendu, la présente invention ne se limite pas à l'exemple illustré et est susceptible de diverses variantes et modifications qui apparaîtront à l'homme de l'art.

## Revendications

1. Composant horloger en matériau composite comprenant au moins un renfort et une matrice, le renfort présentant une structure en nid d'abeille en trois dimensions avec une pluralité d'alvéoles dans lesquelles est injectée la matrice.

2. Composant horloger selon la revendication 1, dans lequel le renfort présentant une structure en nid d'abeille est réalisé au moyen d'un matériau choisi parmi les fibres synthétiques, les fibres naturelles, les métaux y compris sous leur forme amorphes, les céramiques, et les thermoplastiques.

3. Composant horloger selon la revendication 1 ou 2, dans lequel la matrice est choisie parmi les résines thermodurcissables de la famille des polyépoxydes, de la famille des acryliques, de la famille des polyuréthanes ou de la famille des thermoplastiques comme les polyetherketones ou les polyamides, les polyuréthanes, les polyoléfines ou encore de la famille des élastomères comme les polysiloxanes.

4. Composant horloger selon l'une des revendications 1 à 3, dans lequel la matrice comprend un additif parmi des colorants, des pigments phosphorescents et/ou fluorescents, de la silice, des charges de nanotubes de carbone ou encore des charges de nano-diamants.

5. Composant horloger selon la revendication 4, dans lequel la matrice comprend une combinaison d'au moins deux additifs.

6. Composant horloger selon l'une des revendications 1 à 5, dans lequel les alvéoles sont de forme hexagonale.

7. Composant horloger selon l'une des revendications 1 à 6, dans lequel la hauteur des alvéoles est de 0.5mm à 2mm.

8. Composant horloger selon l'une des revendications 1 à 7, dans lequel la longueur des alvéoles est de 0.5mm à 2mm.

9. Procédé de fabrication d'un composant en structure composite à nid d'abeille selon l'une des revendications 1 à 8, comportant les étapes suivantes :
- former le renfort présentant une structure nid d'abeille
- placer le renfort dans un moule,
- fermer le moule et injecter la matrice dans le moule à une température T et une pression P,
- maintenir le moule fermé à la pression P durant le refroidissement,
- extraire le composant formé du moule,
- reprendre le composant en post-traitement par exemple usinage/polissage.

10. Procédé de fabrication fabrication d'un composant en structure composite à nid d'abeille selon l'une des revendications 1 à 8, comportant les étapes suivantes :
- former le renfort présentant une structure nid d'abeille
- fermer les cellules de part et d'autre avec deux feuilles minces en matériaux composites ou métalliques ;
- lier la structure nid d'abeille et les feuilles minces selon la nature des matériaux par collage, brasage, thermosoudage ou soudage ultrasons.
- placer le renfort dans un moule et injecter la résine.
- fermer le moule et injecter la matrice dans le moule à une température T et une pression P,
- maintenir le moule fermé à la pression P durant le refroidissement,
- extraire le composant formé du moule,
- reprendre le composant en post-traitement par exemple usinage/polissage.

11. Procédé selon la revendication 9 ou 10, dans lequel le renfort présentant une structure nid d'abeille est réalisé au moyen d'un matériau choisi parmi les fibres synthétiques, les fibres naturelles, les métaux y compris sous leur forme amorphe, les céramiques, et les thermoplastiques.

12. Procédé selon la revendication 9 ou 10, dans lequel la matrice est choisie parmi les résines thermodurcissables de la famille des polyépoxydes, de la famille des acryliques, de la famille des polyuréthanes ou encore de la famille des polysiloxanes.

13. Procédé selon l'une des revendications 9 à 12, dans lequel la matrice comprend un additif parmi des colorants, des pigments phosphorescents ou fluorescents, de la silice, des charges de nanotubes de carbone ou encore des charges de nano-diamants.

14. Procédé selon la revendication 13, dans lequel la matrice comprend une combinaison d'au moins deux additifs.
